# EUROPEAN PATENT SPECIFICATION

(11) **EP 2 183 744 B1**
(45) Date of publication and mention of the grant of the patent: **24.09.2014**
(21) Application number: 08798303.7
(22) Date of filing: 20.08.2008
(51) Int. Cl.: G11B 27/32, G11B 20/10, G11B 20/12

(54) **DIRECT MASS STORAGE DEVICE FILE INDEXING**
DIREKT-MASSENSPEICHEREINRICHTUNGS-DATEIINDIZIERUNG
INDEXATION DE FICHIERS D'UN DISPOSITIF DE MÉMOIRE DE MASSE À ACCÈS SÉLECTIF

(30) Priority: 24.08.2007 US 966032 P; 23.01.2008 US 18207
(43) Date of publication of application: 12.05.2010
(73) Proprietor: Microsoft Corporation, Redmond, WA 98052-6399 (US)
(72) Inventor: WHITEHORN, Jason, Redmond, Washington 98052-6399 (US); HENDRIXSON, Cory, Redmond, Washington 98052-6399 (US); LEE, Yen-tsang, Redmond, Washington 98052-6399 (US)
(74) Representative: Grünecker, Kinkeldey, Stockmair & Schwanhäusser
(86) International application number: PCT/US2008/073766
(87) International publication number: WO 2009/029460

(56) References cited:
- US-A1- 2003 035 239
- US-A1- 2003 084 261
- US-A1- 2004 128 459
- US-A1- 2004 199 491
- US-A1- 2004 250 033
- US-A1- 2005 152 251
- US-A1- 2005 262 033
- "Microsoft Extensible Firmware Initiative FAT32 File System Specification; FAT: General Overview of On-Disk Format; Version 1.03" INTERNET CITATION 6 December 2000 (2000-12-06), XP002389632 Retrieved from the Internet: URL:http://www.microsoft.com/whdc/system/p latform/firmware.fatgen.mspx [retrieved on 2006-01-01]

## Description

### BACKGROUND

User demand for mass storage capacity continues to grow, especially for storing large audio, video, image, and multimedia files. This capacity demand has affected the design and development of hard disks and removable media such as CDs (compact discs) and DVDs (digital versatile discs). Storage technologies are further evolving to meet user demands for increasingly greater capacity and more flexible capabilities. Examples of such technologies include compact and portable mass storage devices. Mass storage devices are a class of devices used for storing data in a volume which can be shared with other devices and resources using a data transfer protocol running, for example, on a high speed external bus such as Universal Serial Bus ("USB") or IEEE-1394 (Institute of Electrical and Electronics Engineers).

While some mass storage devices use solid state memory as a storage medium, larger capacity portable mass storage devices typically use a small-sized hard disk drive that may often be powered through the USB or IEEE-1394 data cable itself rather than use a separate power cord. These disk-based mass storage devices can thus enable plug-and-play convenience for users with a compact form factor while providing very large amounts of storage for multimedia including, for example, pictures and music libraries.

Mass storage devices typically store data in the form of files which are organized using a file system. The FAT (file allocation table) file system is one commonly used file system for disk-based mass storage devices. The FAT file system has its origins in the late 1970s and early 1980s and was the file system supported by the Microsoft MS-DOS operating system. It was originally developed as a simple file system suitable for floppy disk drives less than 500K (kilobytes) in size. Over time it has been enhanced to support larger and larger media. Currently, there are three FAT file system types: FAT12, FAT16, and FAT32. The basic difference in these FAT sub types, and the reason for the names, is the size, in bits, of the entries in the actual FAT structure on the disk. There are 12 bits in a FAT 12 FAT entry, 16 bits in a FAT 16 FAT entry, and 32 bits in a FAT32 FAT entry.

The FAT file system is characterized by the file allocation table (the "FAT"), which is really a table that resides in a reserved portion of volume. To protect the volume, two copies of the FAT are kept in case one becomes damaged. The FAT tables and the root directory are also stored in a fixed location so that the system's boot files can be correctly located.

While the FAT file system performs well in many applications, it has some inherent limitations. In particular, there is no organization to the FAT directory structure, and files and directories are written to the first open location on a disk. As a result, the clusters used for the files and directories can be randomly distributed on the disk in locations that are not logically close to one another. Accessing the data to enumerate a file index for the volume's contents can be undesirably time consuming because the hard disk drive read/write head must constantly move back and forth, to and from the different tracks on the disk, as it reads the relevant clusters.

This Background is provided to introduce a brief context for the Summary and Detailed Description that follow. This Background is not intended to be an aid in determining the scope of the claimed subject matter nor be viewed as limiting the claimed subject matter to implementations that solve any or all of the disadvantages or problems presented above.

### SUMMARY

An arrangement for enumerating data, such as media content including music, that is stored on external hard disk drive-based mass storage devices is provided by a media content processing system that implements a direct mass storage device file indexing process. This file indexing process is configured for finding all files and directories on the mass storage device, and reading through those parts of the files which contain metadata (such as album name, artist name, genre, track title, track number, etc.) about the file.

Use of the media content processing system reduces file enumeration time by minimizing the amount of physical movement of the read/write head in the mass storage device's hard disk drive as it reads data from the disk. This motion minimization is accomplished by reading the clusters of directory and file data in a sequential manner from the hard disk, rather than by randomly performing such read operations. The media content processing system keeps track of the location of clusters it must process in a work list (i.e., a request queue). Items in the request queue are processed by selecting the next closest cluster to the current physical location of the hard drive read/write head. If additional clusters are required to process an item, those clusters are added to the request queue and processed later, for example, in a subsequent iteration of the direct mass storage indexing process.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### DESCRIPTION OF THE DRAWINGS

FIG 1 is a simplified diagram showing an illustrative hard disk which uses low level formatting that is split into tracks, sectors, and clusters;
FIG 2 shows an illustrative sequence of cluster read operations in which clusters on a hard disk are accessed in random order;
FIG 3 shows an illustrative environment in which files and directories contained on a mass storage device are enumerated using a media content processing system that is located in a vehicle;
FIG 4 shows a layered architecture for the media content processing system shown in FIG 3;
FIG 5 is a flowchart for an illustrative method for processing file and directories that are contained on a mass storage device; and
FIG 6 shows an illustrative sequence of cluster read operations in which clusters on a hard disk are sequentially accessed.

Like reference numerals indicate like elements in the drawings.

### DETAILED DESCRIPTION

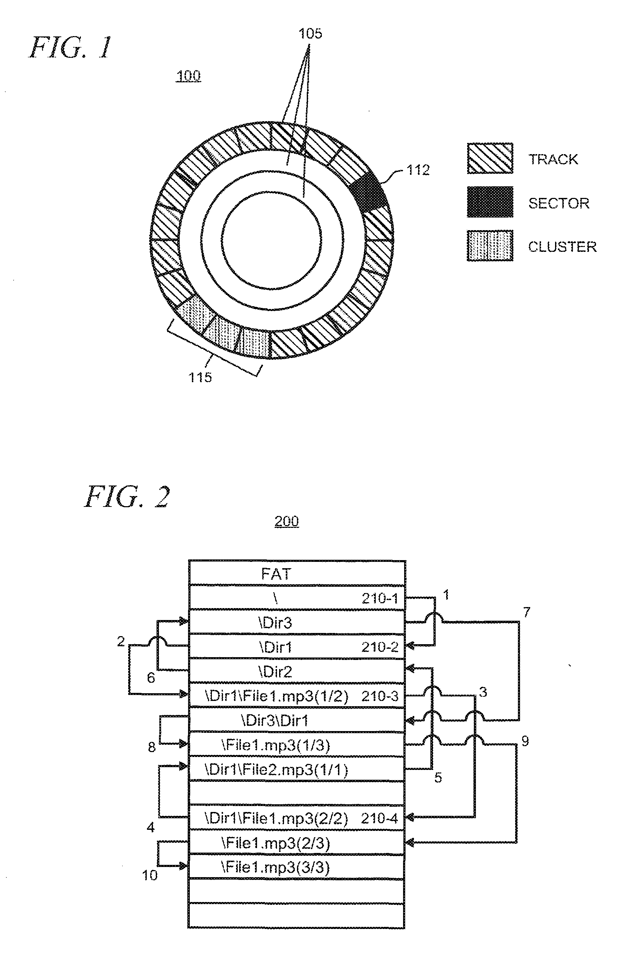

FIG 1 is a simplified diagram showing an illustrative hard disk 100 which uses low level formatting that is split into tracks 105, sectors 112, and clusters 115 to support a FAT file system. The hard disk drives in mass storage devices ("MSDs") can use multiple hard disks (or "platters") that are arranged in stacked configuration. As shown in FIG 1, tracks 105 are configured in concentric circles and each track 105 comprises a number of sectors 112. A multiplicity of tracks 105 are used where the number is dependent on the size of the storage volume that is implemented using the hard disk 100. Each sector holds 512 bytes.

Clusters 115 comprise a set of sectors ranging in number from 2 to 128. The cluster size increases with the size of the hard disk 100 because FAT is limited in the number of clusters that it can track. Thus, larger volumes are supported in FAT by increasing the number of sectors per cluster. A cluster is the minimum space used by any read or write operation to the hard disk 100. Although clusters 115 are shown as being contiguous in FIG 1, the clusters associated with a given file or directory do not necessarily need to be contiguously located on the hard disk 100.

Various portions of the hard disk 100 are allocated for the FAT file system boot sector, one or more FAT tables, the root directory for volume, and a data region for files and directories. When a file is created, an entry is created in the FAT table and the first cluster number containing data is established. This entry in the FAT table either indicates that this is the last cluster of the file, or points to the next cluster. If the size of a file or directory is larger than the cluster size, then multiple clusters are allocated.

FIG 2 is a diagram which shows an illustrative sequence 200 of cluster read operations that occur when enumerating files and directories. In sequence 200, the clusters are accessed on the hard disk 100 (FIG 1) in random order using an existing FAT file enumeration methodology. In this example, several directories (named Dir1, Dir2 and Dir3), and several files are stored on the hard disk 100. The files are music files which are encoded in accordance with MP3 (Moving Picture Experts Group, MPEG-1, Audio Layer-3) which is a common standard for music. Dir1 includes File1.mp3 that is of sufficient size to span two clusters, and also includes File2.mp3 that is stored in a single cluster. The root directory includes File1.mp3 that is stored on disk in three clusters.

Because files and directories are written on the hard disk 100 to the first available clusters, the clusters storing such files and directories are accessed in a random manner as shown in FIG 2. When hard disk 100 is scanned using the FAT32 file system, for example, to enumerate its contents, the boot sector on the disk is consulted to locate the root directory indicated by numeral 210-1. The read/write head of the hard disk drive then moves to a location that is identified in the root directory to access Dir1, as indicated by reference numeral 210-2. The read/write head then goes to a location that is identified in Dir1 to access cluster 210-3 which is used to store the first cluster of music file File1.mp3.

To locate the next piece of the File1.mp3, the read/write head moves to consult the FAT table on the hard disk 100, and then moves to the identified cluster to access 210-4 as shown. The process of consulting the directory entries and/or the FAT table and then moving to the identified cluster repeats in order to access the remaining directories, subdirectories, and files continues until all the contents on the hard drive are enumerated. Because the read/write head of the hard disk drive must continually move across the platters of the drive to get to the location of the FAT table, and to the clusters which store the files and directories, considerable latency may occur during enumeration of the volume's contents when using current FAT file system methodologies.

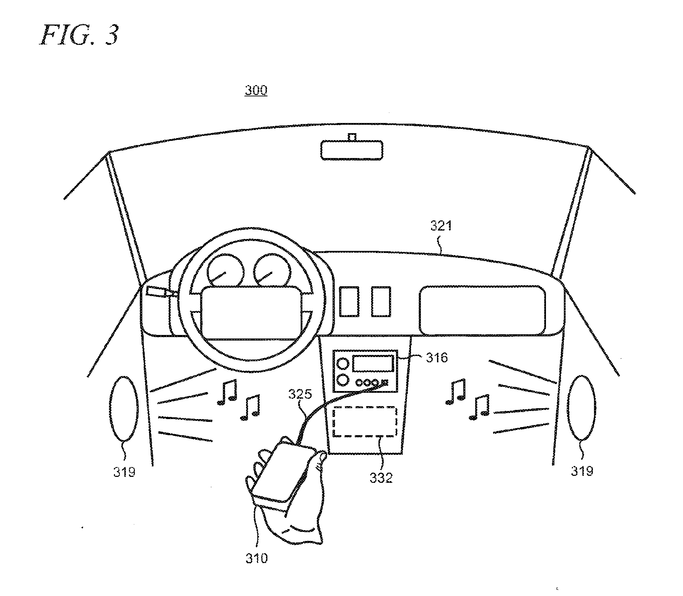

FIG 3 shows an illustrative environment 300 in which files and directories contained on an MSD 310 are enumerated using a media content processing system that employs the present direct MSD file indexing. In this example, environment 300 is an automotive environment in which a user employs the MSD 310 to store media content including music that the user desires to be rendered (i.e., played) over a sound/entertainment system 316 and speakers 319 that are located in a vehicle 321. However, it is emphasized that the environment 300 is merely illustrative and that the present direct MSD file indexing is not limited to automotive applications or music files. It is further contemplated that the benefits of direct MSD file indexing may be applied to any type of content (for example, data and other media content such as photographs and video) that is stored on an MSD using the FAT file system in a variety of different applications and implementations.

MSD 310, in this example, is a conventional hard disk-based device that is configured to be compact and portable and is further arranged as a volume under the FAT32 file system. MSD 310 is coupled to the sound/entertainment system 316 in the vehicle 321 using a USB cable 325 that carries signals in compliance with USB 2.0, although in alternative implementations other data transfer busses and protocols may also be utilized, including those, for example which use wireless or optical infrastructure.

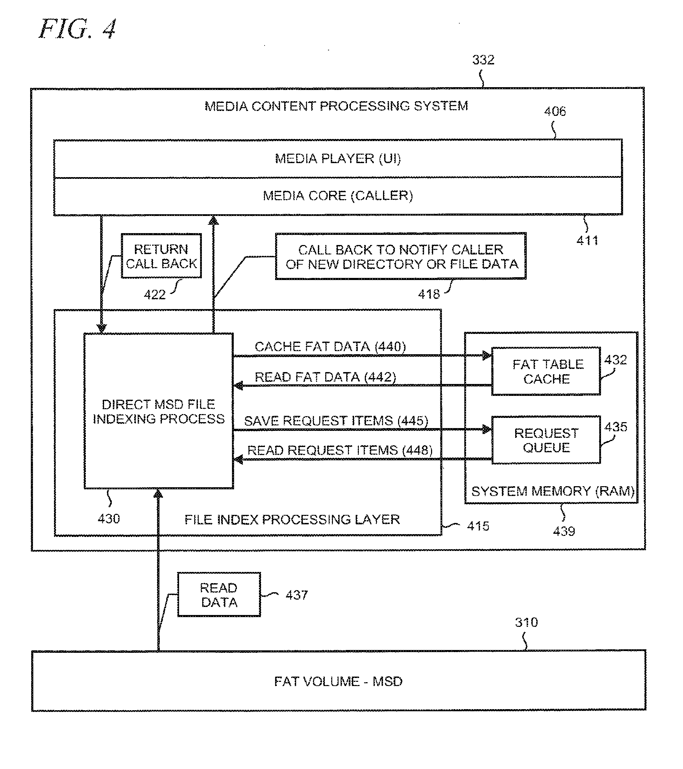

A media content processing system 332 is also operative in the environment 300. In this example, media content processing system 332 is a discrete system in the vehicle 321 and is typically located behind the dashboard or console area, although other locations may also be utilized as dictated by the circumstances of a particular implementation. The media content processing system 332 is configured to be operatively connectable to the sound/entertainment system 316 over an interface (not shown), or it may be optionally integrated with the functionality provided by the sound/entertainment system 316 in common package or form factor in some applications. Media content processing system 332 is shown in detail in FIG 4 and described in the accompanying text below.

As shown in FIG 4, the media processing system 332 includes a layered architecture that comprises a media player 406, a media core 411, and a file index processing layer 415. The media player 406 is arranged to provide user interface ("UI") functionality by exposing, in this illustrative example, a file index for data, including media content such as music, which is stored on the MSD 310. Thus, for example, when a user plugs the MSD 310 into the sound/entertainment system 316, the media player 406 functions to provide enumeration of the music on the MSD 310 in an indexed list that is displayed on a screen or other UI device from which the user may browse and select items to be played.

The media core 411 is arranged to parse file and/or directory data received from a process operating in the file index processing layer 415 to thereby perform the file enumeration through call back and return messages, as respectively indicated by reference numerals 418 and 422. Media core 411 may be optionally arranged to provide additional features and functionalities including, for example, media content decoding, rendering, and playback control in some implementations.

The file index processing layer 415 includes a direct MSD file indexing process 430 which interacts with the media core 411, as shown, and which also interacts with a FAT table cache 432 and a request queue 435. The direct MSD file indexing process 430 is further configured to read data from the MSD 310 that is sent using the USB protocol, in this illustrative example, as indicated by reference numeral 437.

The FAT table cache 432 is used to cache FAT table data whenever it is read from the hard disk 100 (FIG 1). This caching is performed due to the likelihood that the next required FAT table lookup for data of interest will be included in any recently read FAT table data. Caching such data may reduce the necessity of the read/write head having to move back to consult the FAT table on the hard disk which can advantageously reduce the latency in file enumeration.

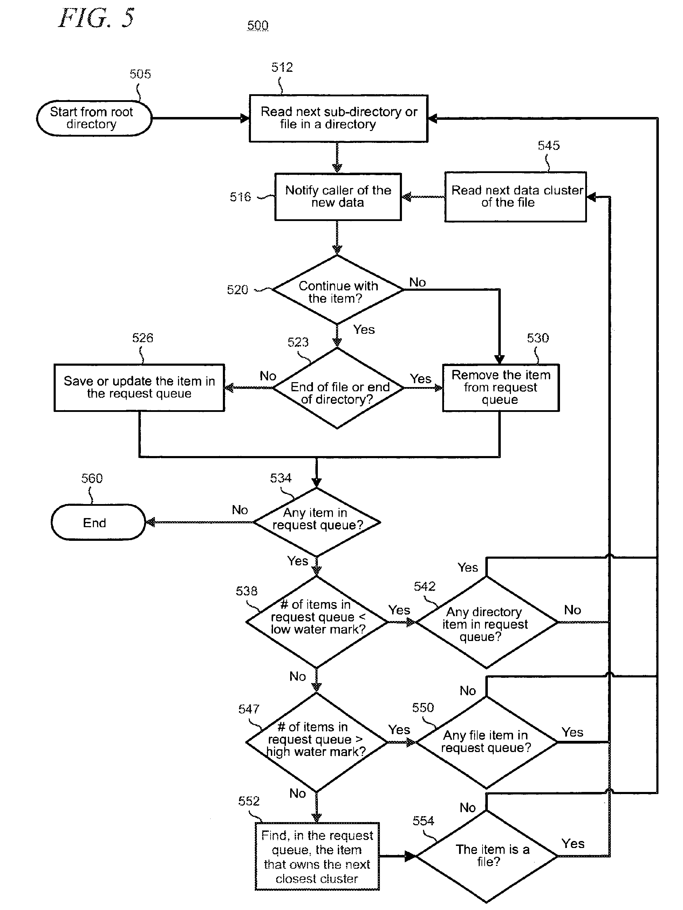

The FAT table cache 432 and request queue 435 are implemented in system memory 439 (e.g., volatile random access memory or "RAM"). The interaction between the FAT table cache 432 and direct MSD file indexing process 430 includes caching FAT table data, as indicated by reference numeral 440, and reading FAT table data from the cache, as indicated by reference numeral 442. The interaction between the request queue 435 and direct MSD file indexing process 430 includes saving request items in the queue, as indicated by reference numeral 445, and reading request items from the queue, as indicated by reference numeral 448. The operation of the direct MSD file indexing process 430 is shown in the flowchart in FIG 5 and described in the accompanying text.

FIG 5 is a flowchart for an illustrative method 500 performed by the media content processing system 332 for processing files and directories that are contained on the mass storage device 310. The method starts at block 505 at the root directory. At block 512, an entry is read in a directory (e.g., either the root directory or a directory on the hard disk 100) to identify a file or subdirectory.

At block 516, the direct MSD file indexing process 430 notifies the caller (i.e., the media core 411) of the new data ascertained from the method step at block 512. Control passes to decision block 520 where the caller decides whether it is interested in the new data. For example, the file extension may be of a particular type that is utilized in the illustrative environment 300 such as an MP3, WMA (Windows® Media Audio), or WAV (WAVeform audio format) file. In this case then, data associated with non-audio formats or file extensions would not be of interest.

Another example for which the caller may not be interested in the data is where enough parts of file have already been located so as to identify particular metadata of interest that will be used to enumerate the stored content and create a file index. Typically, and in this illustrative example, the metadata of interest relates to music and includes album name, artist name, genre, track (e.g., song) title, track number, etc. Thus, if all the metadata is already located, then the caller will not need to continue with an item even when it is a logical part of a file that was previously identified as being of interest. While such logical parts of the file would be needed to play back the content, they are not needed for enumeration purposes and could thus be skipped.

If the data is of interest to the caller, then control passes to decision block 523 where the direct MSD file indexing process 430 determines if the entire directory or file has been read. If it has not, then an item is either saved or updated in the request queue 435, as indicated at block 526. If the data is not of interest to the caller, then control passes to block 530, and an item is either not added, or removed, from the request queue.

Control passes from either block 526 or block 530 to decision block 534 where the direct MSD file index process 430 determines if there are any items in the request queue 435. If so, then control passes to decision block 538 where the direct MSD file indexing process 430 determines if the number of items in the request queue 435 is less than a low water mark (i.e., a lower limit). If so, then at decision block 542, if there are any directory items in the request queue 435, control returns to block 512 where the next sub-directory or file associated with that directory item in the request queue 435 is read. The low water mark is used to designate a set minimum number of items in the request queue 435 above which it is efficient to process the queued items.

If there are no directory items in the request queue 435, then control passes to block 545 where the next data cluster that is associated with that file item in the request queue 435 is read.

If the number of items is not below the low water mark, then control passes to block 547. If the number of items in the request queue 435 is greater than a high water mark (i.e., an upper limit), then control passes to block 550. If there are no file items in the request queue 435, then control returns to block 512 where the next sub-directory or file associated with that directory item in the request queue 435 is read.

If there are file items in the request queue 435, then control passes to block 545 where the next data cluster that is associated with that file item in the request queue 435 is read. If the number of items in the request queue 435 is less than the high water mark, then control passes to block 552 where the file item in the request queue 435 that owns the next closest cluster is found. At decision block 554, if the item in the request queue 435 is a file, then control passes to block 545 where the next data cluster that is associated with that file item in the request queue 435 is read. If the next item is not a file (i.e., it is a directory), then control returns to block 512 where the next sub-directory or file associated with that directory item in the request queue 435 is read. The high water mark may be configured to different values depending on the requirements of a particular implementation and will typically be sized in light of available resources such as system memory.

The above described method is successively iterated until, at block 534, when there are no more items remaining in request queue 435, the method ends at block 560.

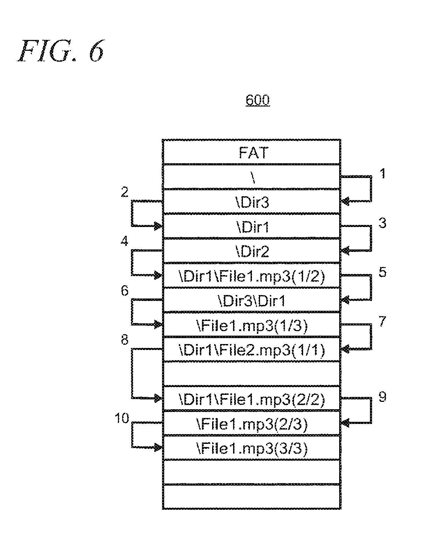

FIG 6 shows an illustrative sequence 600 of cluster read operations in which clusters on the hard disk 100 (FIG 1) are accessed in sequence using the method shown in FIG 5 and described in the accompanying text. The clusters are associated with the same directories and files as shown in FIG 2. As shown in FIG 6, the clusters are read sequentially to minimize read/write head movement on the hard disk 100 which advantageously reduces latency in file indexing.
Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method performable by a media content processing system (332) for enumerating a plurality of directories and files stored on a mass storage device, MSD, volume (310) that is formatted using a file allocation table, FAT, file system, the method comprising the steps of:
implementing in a memory (439) a request queue (435) for storing, by a file indexing process (430) running on the media content processing system (332), request items associated with directories and files of the plurality of directories and files stored on the MSD volume;
reading (500) sequentially clusters from the MSD volume, starting (505) from the root directory, by iteratively:
reading (512) a cluster containing directory or file data for the media content;
if (523) the entire directory or file data has not been read, saving or updating (526) a request item associated with the cluster in the request queue, otherwise removing (530) from the request queue, if it exists, the request item associated with the cluster;
as long as (534) there are any request items in the request queue, if (538, 547) a number of request items in the request queue is higher than a lower limite and lower than an upper limit,
finding (552), in the request queue, the request item owning a next cluster closest to a current physical location of a read/write head of the MSD volume;
if the request item owning the next closest cluster is associated to a file, the next closest cluster associated to said file is read (545) and the method comes back to the step of determining (523) if the entire directory or file data has been read; and
if the request item owning the next closest cluster is associated to a directory, the next subdirectory or file associated to said directory is read (512) and the method comes back to the step of determining (523) if the entire directory or file data has been read; and
generating a file index for the media content using metadata contained in the clusters read for the plurality of directories and files of the MSD volume.

2. The method of claim 1 including the steps of caching a FAT table (432) in the memory (439) and reading data from the cached FAT table.

3. The method of claim 1 in which at least one file of the MSD volume is an audio file, the metadata of which comprises one of album name, artist name, genre, track title, or track number.

4. The method of one of claims 1 to 3, further comprising, after each reading step (512, 545) in the iteration:
examining a cluster (520) to determine if the cluster contains sufficient metadata to create an entry in the file index for the identified file;
if the cluster contains sufficient metadata, then passing the metadata for the identified file from the cluster for inclusion in the file index and removing (530) from the request queue, if it exists, the request item associated with the cluster; and
if the cluster does not contain sufficient metadata, then going to step (523) of determining whether the entire directory or file data has been read to indicate that one or more additional clusters are needed to enable passing metadata for the identified file.

5. A computer readable medium containing instructions which, when carried out by one or more processors disposed in an electronic device, cause the one or more processors to perform the method of one claims 1 to 4.

6. A media content processing system (332) for enumerating a plurality of directories and files stored on a mass storage device, MSD, volume (310) that is formatted using a file allocation table, FAT, file system, the media content processing system comprising means adapted to perform the method steps of one of claims 1 to 4.

## Patentansprüche

1. Verfahren, das von einem Medieninhaltsverarbeitungssystem (332) ausgeführt werden kann, um eine Vielzahl von Verzeichnissen und Dateien zu numerieren, die auf einem Massenspeichervorrichtungs-, MSD-, Datenträger (310) gespeichert sind, der mit Hilfe eines Dateizuordnungstabellen-, FAT-, Dateisystems formatiert ist, wobei das Verfahren die folgenden Schritte umfasst:
Einsetzen einer Anforderungswarteschlange (435) in einem Speicher (439), um durch einen Dateiindiziervorgang (430), der auf dem Medieninhaltsverarbeitungssystem (332) läuft, Anforderungsgegenstände zu speichern, die mit Verzeichnissen und Dateien der Vielzahl von Verzeichnissen und Dateien assoziiert sind, die auf dem MSD-Datenträger gespeichert sind;
aufeinander folgendes Lesen (500) von Clustern von dem MSD-Datenträger, beginnend (505) an dem Root-Verzeichnis durch iteratives:
Lesen (512) eines Clusters, der ein Verzeichnis oder Dateidaten für den Medieninhalt umfasst;
sofern (523) das gesamte Verzeichnis oder die Dateidaten nicht gelesen wurden, Sichern oder Aktualisieren (526) eines Anforderungsgegenstandes, der mit dem Cluster in der Anforderungswarteschlange assoziiert ist, andernfalls Entfernen (530), sofern vorhanden, des Anforderungsgegenstandes, der mit dem Cluster assoziiert ist, aus der Anforderungswarteschlange;
solange (534) es beliebige Anforderungsgegenstände in der Anforderungswarteschlange gibt, sofern (538, 547) eine Anzahl von Anforderungsgegenständen in der Anforderungswarteschlange größer ist als eine untere Grenze und geringer ist als eine obere Grenze,
Auffinden (552) des Anforderungsgegenstandes, der einen nächsten Cluster besitzt, der einem aktuellen physikalischen Ort eines Schreib-/Lesekopfes des MSD-Datenträgers nächstgelegen ist, in der Anforderungswarteschlange;
sofern der Anforderungsgegenstand, der den nächsten nächstgelegenen Cluster besitzt, mit einer Datei assoziiert ist, wird der nächste nächstgelegene Cluster, der mit der Datei assoziiert ist, gelesen (545) und das Verfahren kehrt zu dem Schritt des Bestimmens (523) zurück, sofern das gesamte Verzeichnis oder die Dateidaten gelesen wurden; und,
sofern der Anforderungsgegenstand, der den nächsten nächstgelegenen Cluster besitzt, mit einem Verzeichnis assoziiert ist, wird das nächste Teilverzeichnis oder die Datei, die mit dem Verzeichnis assoziiert ist, gelesen (512), und das Verfahren kehrt zu dem Schritt des Bestimmens (523) zurück, sofern das gesamte Verzeichnis oder die Dateidaten gelesen wurden; und
Erzeugen eines Dateündexes für den Medieninhalt mit Hilfe von Metadaten, die in den Clustern enthalten sind, die aus der Vielzahl von Verzeichnissen und Dateien des MSD-Datenträgers gelesen werden.

2. Verfahren nach Anspruch 1, umfassend die Schritte des Zwischenspeicherns einer FAT-Tabelle (432) in dem Speicher (439) und Lesen von Daten aus der zwischengespeicherten FAT-Tabelle.

3. Verfahren nach Anspruch 1, bei dem wenigstens eine Datei des MSD-Datenträgers eine Audiodatei ist, deren Metadaten einen Albumnamen oder einen Künstlernamen oder ein Genre oder einen Titelnamen oder eine Titelnummer umfassen.

4. Verfahren nach einem der Ansprüche 1 bis 3, weiterhin umfassend nach jedem Leseschritt (512, 545) in der Iteration:
Untersuchen eines Clusters (520) um zu bestimmen, ob der Cluster ausreichende Metadaten enthält, um einen Eintrag in dem Dateiindex für die identifizierte Datei zu erzeugen;
sofern der Cluster ausreichende Metadaten umfasst, weiterleiten der Metadaten für die identifizierte Datei von dem Cluster für das Einschließen in dem Dateiindex und Entfernen (530), sofern vorhanden, des Anforderungsgegenstandes, der mit dem Cluster assoziiert ist, aus der Anforderungswarteschlange; und,
sofern der Cluster keine ausreichenden Metadaten umfasst, Fortfahren zu Schritt (523) des Bestimmens, ob das gesamte Verzeichnis oder die Dateidaten gelesen wurden um zu kennzeichnen, dass wenigstens ein zusätzlicher Cluster erforderlich ist, um das Weiterleiten von Metadaten für die identifizierte Datei zu ermöglichen.

5. Computerlesbares Medium, das Anweisungen umfasst, die, wenn sie von wenigstens einem Prozessor ausgeführt werden, der sich in einer elektronischen Vorrichtung befindet, den wenigstens einen Prozessor dazu veranlassen, das Verfahren nach einem der Ansprüche 1 bis 4 auszuführen.

6. Medieninhaltsverarbeitungssystem (332) zum Numerieren einer Vielzahl von Verzeichnissen und Dateien, die auf einem Massenspeichervorrichtungs-, MSD-, Datenträger (310) gespeichert sind, der mit Hilfe eines Dateizuordnungstabellen-, FAT-, Dateisystems formatiert ist, wobei das Medieninhaltsverarbeitungssystem Einrichtungen umfasst, die dazu eingerichtet sind, die Verfahrensschritte nach einem der Ansprüche 1 bis 4 auszuführen.

## Revendications

1. Procédé pouvant être mis en oeuvre par un système de traitement de contenu média (332) pour énumérer une pluralité de répertoires et de fichiers stockés sur un volume (310) d'un dispositif de mémoire de masse MSD, soit Mass Storage Device, qui est formaté en utilisant un système de fichiers à table d'attribution de fichiers FAT, soit File Allocation Table, le procédé comprenant les étapes suivantes :
mise en oeuvre dans une mémoire (439) d'une file d'attente de demandes (435) pour stocker, via un processus d'indexation de fichiers (430) fonctionnant sur le système de traitement de contenu média (332), des éléments de demande associés à des répertoires et à des fichiers de la pluralité de répertoires et de fichiers stockés sur le volume MSD ;
lecture (500) séquentielle de blocs du volume MSD, en commençant (505) par le répertoire racine, en effectuant itérativement :
la lecture (512) d'un bloc contenant des données de répertoire ou de fichier pour le contenu média ;
si (523) toutes les données de répertoire ou de fichier n'ont pas été lues, la sauvegarde ou la mise à jour (526) d'un élément de demande associé au bloc dans la file d'attente de demandes, et dans le cas contraire l'élimination (530) de l'élément de demande associé au bloc, s'il existe, dans la file d'attente de demandes ;
aussi longtemps (534) qu'il existe des éléments de demande dans la file d'attente de demandes, si (538, 547) un nombre d'éléments de demande dans la file d'attente de demandes est supérieur à une limite inférieure et inférieur à une limite supérieure,
localisation (552), dans la file d'attente de demandes, de l'élément de demande possédant un bloc suivant le plus proche d'une position physique courante d'une tête de lecture/écriture du volume MSD ;
si l'élément de demande possédant ledit bloc suivant le plus proche est associé à un fichier, ledit bloc suivant le plus proche associé audit fichier est lu (545) et le procédé revient à l'étape de détermination (523) si toutes les données de répertoire ou de fichier ont été lues ; et
si l'élément de demande possédant ledit bloc suivant le plus proche est associé à un répertoire, le prochain sous-répertoire ou fichier associé audit répertoire est lu (512) et le procédé revient à l'étape de détermination (523) si toutes les données de répertoire ou de fichier ont été lues ; et
génération d'un index de fichier pour le contenu média en utilisant des métadonnées contenues dans les blocs lus pour la pluralité de répertoires et de fichiers du volume MSD.

2. Procédé selon la revendication 1, comprenant les étapes de mise en cache d'une table FAT (432) dans la mémoire (439) et de lecture de données dans la table FAT mise en cache.

3. Procédé selon la revendication 1, dans lequel au moins un fichier du volume MSD est un fichier audio dont les métadonnées comprennent un élément parmi un nom d'album, un nom d'artiste, un genre, un titre de piste et un numéro de piste.

4. Procédé selon l'une des revendications 1 à 3, comprenant en outre, après chaque étape de lecture (512, 545) de l'itération :
l'examen d'un bloc (520) pour déterminer si le bloc contient suffisamment de métadonnées pour créer une entrée dans l'index de fichier pour le fichier identifié ;
si le bloc contient suffisamment de métadonnées, le transfert des métadonnées pour le fichier identifié depuis le bloc pour une inclusion dans l'index de fichier et l'élimination (530) de l'élément de demande associé au bloc, s'il existe, dans la file d'attente de demandes ; et
si le bloc ne contient pas suffisamment de métadonnées, le passage à l'étape (523) consistant à déterminer si toutes les données de répertoire ou de fichier ont été lues ou non pour indiquer qu'un ou plusieurs blocs additionnels sont nécessaires pour permettre le transfert de métadonnées pour le fichier identifié.

5. Support lisible par un ordinateur et contenant des instructions qui, lorsqu'elles sont exécutées par un ou plusieurs processeurs agencés dans un dispositif électronique, commandent auxdits un ou plusieurs processeurs de mettre en oeuvre le procédé selon l'une des revendications 1 à 4.

6. Système de traitement d'un contenu média (332) pour énumérer une pluralité de répertoires et de fichiers stockés sur un volume (310) d'un dispositif de mémoire de masse MSD qui est formaté en utilisant un système de fichiers à table d'attribution de fichiers FAT, le système de traitement de contenu média comprenant un moyen adapté pour mettre en oeuvre les étapes d'un procédé selon l'une des revendications 1 à 4.
